# EUROPÄISCHE PATENTSCHRIFT

(11) **EP 0 945 635 B1**
(45) Veröffentlichungstag und Bekanntmachung des Hinweises auf die Patenterteilung: **10.11.2004**
(21) Anmeldenummer: 99102758.2
(22) Anmeldetag: 22.02.1999
(51) Int. Cl.: F16D 3/50, F16D 3/68

(54) **Elastische Kupplung**
Elastic coupling
Accouplement élastique

(30) Priorität: 26.03.1998 DE 19813403
(43) Veröffentlichungstag der Anmeldung: 29.09.1999
(73) Patentinhaber: Stromag AG, 59425 Unna (DE)
(72) Erfinder: Mehlan, Andreas, Dr., 59425 Unna (DE)
(74) Vertreter: Patentanwälte Ruff, Wilhelm, Beier, Dauster & Partner

(56) Entgegenhaltungen:
- EP-A- 0 245 668
- EP-A- 0 702 164
- US-A- 5 545 090

## Beschreibung

Die Erfindung betrifft eine elastische Kupplung mit wenigstens zwei Kupplungsreihen, die jeweils aus mehreren, ringförmig aneinanderschließenden elastischen Kupplungssegmenten zusammengesetzt sind, wobei die Kupplungssegmente der beiden Kupplungsreihen in einem Betriebszustand der Kupplung fest miteinander verbunden sind.

Solche elastische Kupplungen sind in Form von Stromag TRI-Kupplungen der Anmelderin bekannt, siehe z.B. EP-A-0 245 668. Eine solche bekannte Kupplung weist vorzugsweise zwei Kupplungsreihen auf, die jeweils durch ringartig aneinanderschließende, elastische Kupplungssegmente gebildet sind. Jedes Kupplungssegment verläuft über einen definierten Kreisringabschnitt und weist einen elastischen Zwischenkörper auf, der auf gegenüberliegenden Radialoder Axialseiten durch zwei metallische Segmentteile flankiert ist, an die der elastische Zwischenkörper vorzugsweise jeweils anvulkanisiert ist. Die Kupplungssegmente der unterschiedlichen Kupplungsreihen sind unterschiedlich gestaltet und jeweils auf verschiedenartige Wirkfunktionen abgestimmt. So können die Kupplungssegmente der ersten Kupplungsreihe eine axiale Nachgiebigkeit und die Kupplungssegmente der zweiten Kupplungsreihe eine radiale Nachgiebigkeit gewährleisten, wobei beide in gleichem Maße drehnachgiebig gestaltet sind.

Die Kupplungssegmente der benachbarten Kupplungsreihen werden dadurch miteinander verbunden, daß die jeweils benachbarten metallischen Segmentteile der Kupplungssegmente vorzugsweise durch Verschraubung fest miteinander verbunden werden. Die jeweils anderen metallischen Segmentteile beider Kupplungsreihen werden antriebs- bzw. abtriebsseitig festgelegt. Die antriebs- bzw. abtriebsseitige Festlegung der metallischen Segmentteile der Kupplungssegmente ist unkritisch, da diese jeweils an einstückig umlaufenden Ringflanschen der Antriebs- bzw. Abtriebsseite festgelegt werden. Um jedoch auch für den Mittelbereich zwischen den aneinanderliegenden Segmentteilen der Kupplungssegmente beider Kupplungsreihen eine umlaufend starre, ringförmige Verbindung zu schaffen, müssen die Kupplungssegmente beider Kupplungsreihen derart in Umfangsrichtung versetzt zueinander ausgerichtet werden, daß die Kupplungssegmente beider Kupplungsreihen sich über den gesamten Umfang jeweils teilweise überlagern. Falls die Kupplungssegmente der benachbarten Kupplungsreihen jedoch fehlerhaft ohne eine Versetzung in Umfangsrichtung montiert werden, ist die einwandfreie Funktion der Kupplung nicht gegeben.

Aufgabe der Erfindung ist es, eine elastische Kupplung der eingangs genannten Art zu schaffen, die Funktionsausfälle aufgrund fehlerhafter Montage ausschließt.

Diese Aufgabe wird dadurch gelöst, daß wenigstens zwei einander benachbarte Kupplungssegmente jeder Kupplungsreihe mit wenigstens einer gemeinsamen, formschlüssig wirksamen Paßanordnung versehen sind, mittels der die benachbarten Kupplungssegmente ausschließlich in einer definierten, in Umfangsrichtung teilweise überlagerten Montageposition zusammenfügbar sind. Durch die Paßanordnung wird eine Codierung der Kupplungsreihen erzielt, die zu Fehlfunktionen führende Montagen der Kupplungsreihen ausschließt. Denn die Kupplungssegmente der benachbarten Kupplungsreihen sind ausschließlich in der gewünschten, überlagerten Montageposition zusammenfügbar. Eine Codierung für zwei einander benachbarte Kupplungssegmente der benachbarten Kupplungsreihen bzw. bei mehr als zwei Kupplungsreihen einer entsprechend vergrößerten Anzahl von Kupplungssegmenten, reicht aus, da die in Umfangsrichtung ringförmig anschließenden Kupplungssegmente der Kupplungsreihen zwangsläufig entsprechend versetzt montiert werden müssen. Durch die versetzte Anordnung der Kupplungssegmente wird verhindert, daß entsprechende Mittelmassen der benachbarten Kupplungsreihen, die vorzugsweise durch die aneinanderliegenden metallischen Segmentteile gebildet werden, unter Drehzahl durch entsprechende Zentrifugalkräfte nach außen verschoben werden, wodurch Überlastungen der elastischen Zwischenkörper auftreten könnten.

In Ausgestaltung der Erfindung weist die Paßanordnung wenigstens einen an einem Kupplungssegment einer ersten Kupplungsreihe fest verankerten Paßfortsatz sowie wenigstens eine korrespondierende, den Paßfortsatz aufnehmende Paßaussparung an der zweiten Kupplungsreihe auf, die bei in Umfangsrichtung zueinander teilweise überlagerter Montageposition der Kupplungssegmente ineinanderfügbar sind. Der wenigstens eine Paßfortsatz kann dabei je nach Anordnung entsprechender mittlerer Segmentteile der Kupplungssegmente radial oder axial ausgerichtet sein. Als Paßaussparung kann eine im korresponidierenden Kupplungssegment der anderen Kupplungsreihe vorgesehene Aussparung oder auch eine ohnehin vorhandene Teilungsfuge zwischen den benachbarten Kupplungssegmenten der anderen Kupplungsreihe vorgesehen sein.

In weiterer Ausgestaltung der Erfindung ist der Paßfortsatz als axial von einem stabilen Segmentteil des einen Kupplungssegmentes abragender Bolzen gestaltet, dem an einem benachbarten Segmentteil des anderen Kupplungssegmentes eine korrespondierende Axialbohrung zugeordnet ist, die den Bolzen mit wenigstens geringem Spiel aufnimmt. Die. so gestaltete Spielpassung ermöglicht ein einfaches Zusammenfügen der Kupplungssegmente der unterschiedlichen Kupplungsreihen in der gewünschten Montageposition. Als stabile Segmentteile sind insbesondere metallische Mittelsegmentteile vorgesehen. Der axial abragende Bolzen ist durch eine Preßpassung oder in anderer Art und Weise fest mit dem stabilen Segmentteil verankert, wobei die entsprechende Verankerung bereits bei der Herstellung der Kupplungssegmente erfolgt. Alternativ kann die feste Verankerung auch durch eine einstückige Anformung des Bolzens an dem Segmentteil gebildet sein.

In weiterer Ausgestaltung der Erfindung weist bei zumindest teilweise konzentrisch überlagerten Kupplungsreihen die Paßanordnung wenigstens einen radial abragenden Paßfortsatz an einem Kupplungssegment der ersten Kupplungsreihe auf, der in der Montageposition in wenigstens eine korrespondierend radial ausgerichtete Paßaussparung eines Kupplungssegmentes der anderen Kupplungsreihe hineinragt. Diese Ausgestaltung ist vorteilhaft, falls die mittleren Segmentteile beider Kupplungsreihen sich zumindest teilweise in einer gemeinsamen Radialebene zur Kupplungsdrehachse befinden.

Weitere Vorteile und Merkmale der Erfindung ergeben sich aus den Ansprüchen sowie aus der nachfolgenden Beschreibung von bevorzugten Ausführungsbeispielen der Erfindung, die anhand der Zeichnungen dargestellt sind.
- Fig. 1: zeigt in einer Frontansicht eine Ausführungsform einer erfindungsgemäßen elastischen Kupplung, die mit zwei axial aneinanderschließenden Kupplungsreihen versehen ist,
- Fig. 2: einen Halbschnitt durch die elastische Kupplung nach Fig. 1, wobei zusätzlich noch weitere Nabenteile dargestellt sind,
- Fig. 3: schematisch eine Abwicklung einer weiteren Ausführungsform einer erfindungsgemäßen elastischen Kupplung mit zwei Kupplungsreihen ähnlich den Fig. 1 und 2, und
- Fig. 4: in vergrößerter Darstellung einen Ausschnitt IV der schematisch dargestellten Kupplung nach Fig. 3.

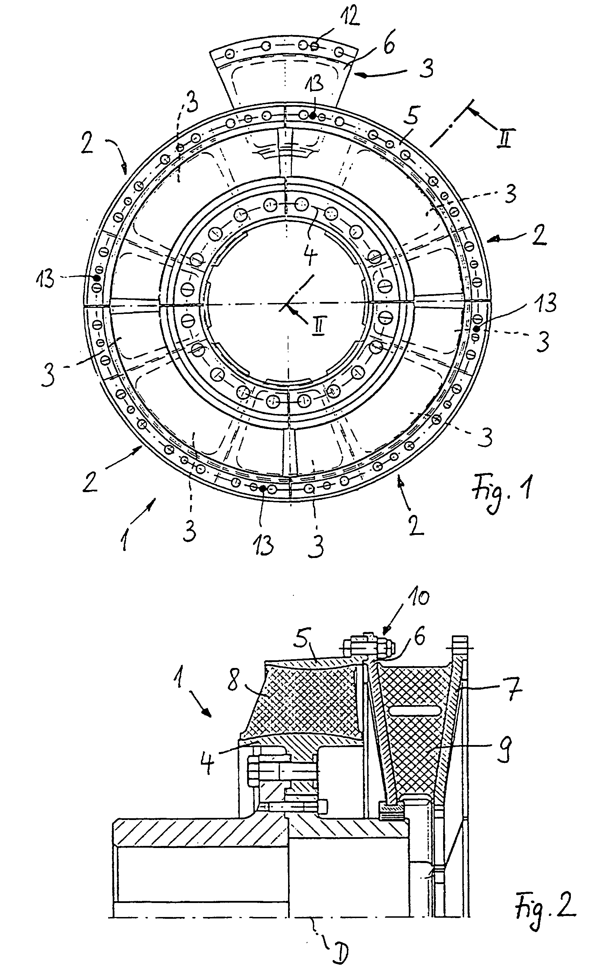

Eine hochelastische Kupplung 1 ist insbesondere für dieselmotorische und elastisch aufgestellte Schiffahrtsantriebe, jedoch auch für ähnliche Einsätze an anderen Kolbenmaschinen geeignet. Die Kupplung 1 weist zwei Kupplungsreihen 2, 3 auf, wobei gemäß den Fig. 1 und 2 die eine Kupplungsreihe aus vier ringförmig zusammengesetzten Kupplungssegmenten 2 und die andere Kupplungsreihe aus acht ebenfalls ringförmig zusammengesetzten Kupplungssegmenten 3 aufgebaut sind. Beim dargestellten Ausführungsbeispiel ist die mit den vier Kupplungssegmenten 2 versehene Kupplungsreihe antriebsseitig angeflanscht, indem sie mit entsprechenden Nabenabschnitten verbunden ist. Die andere Kupplungsreihe wird in nicht näher dargestellter Weise abtriebsseitig festgelegt. Aufbau und Funktion einer solchen Kupplung 1 sind grundsätzlich bekannt.

Die Kupplungssegmente 2 weisen einen elastischen Zwischenkörper 8 in Form eines Gummikörpers auf, der radial außen an einen metallischen Mittelsegmentteil 5 und radial innen an einen metallischen Antriebssegmentteil 4 anvulkanisiert ist. Die vier Kupplungssegmente 2 erstrecken sich jeweils in Umfangsrichtung über einen Viertelkreis, so daß sie gemeinsam einen geschlossenen Kreisring ergeben. Zwischen den Kupplungssegmenten 2 verbleiben schmale Teilungsfugen, die im Bereich der Gummikörper 8 breiter sind als im Bereich der Segmentteile 4, 5. Die Antriebssegmentteile 4 der Kupplungssegmente 2 weisen radial nach innen_abragende Flanschabschnitte auf, mittels der die Kupplungssegmente 2 an einem einstückig umlaufenden, radial nach außen abragenden Ringflansch der antriebsseitigen Nabe festgelegt sind. Alle Kupplungssegmente 2 sind somit an dem gemeinsamen Ringflansch befestigt.

Die andere Kupplungsreihe weist acht gleichgroße und im wesentlichen identisch gestaltete Kupplungssegmente 3 auf, die jeweils mit einem sich axial zwischen zwei metallischen Segmentteilen 6, 7 erstreckenden elastischen Zwischenkörper 9 in Form eines Gummikörpers versehen sind. Der elastische Zwischenkörper 9 ist zu beiden Seiten axial an den Segmentteilen 6, 7 anvulkanisiert, wobei der eine metallische Segmentteil einen Mittelsegmentteil 6 und der andere metallische Segmentteil einen Abtriebssegmentteil 7 darstellen. Der Abtriebssegmentteil 7 weist einen radial nach außen abragenden Flanschabschnitt auf, der mit Bohrungen für die Verschraubung mit einem nicht dargestellten, abtriebsseitigen Ringflansch versehen ist. Die abtriebsseitigen Segmentteile 7 werden somit gemeinsam an einem einstückigen Ringflansch festgelegt.

Im Bereich der metallischen Mittelsegmentteile 5, 6 sind die beiden Kupplungsreihen mit Hilfe einer Vielzahl von über den gesamten Umfang der Kupplung 1 verteilten Schraubverbindungen 10 axial miteinander verbunden. Um über den gesamten Umfang eine durchgehend geschlossene Verbindung zwischen den metallischen Segmentteilen 5, 6 der Kupplungssegmente 2 und 3 zu erzielen, sind die Teilungsfugen der Kupplungssegmente 3 und der Kupplungssegmente 2 derart in Umfangsrichtung versetzt positioniert, daß an keiner Stelle zwei Teilungsfugen der hintereinanderliegenden Kupplungsreihen der Kupplungssegmente 2 und 3 axial miteinander fluchten. Die gewünschte, in Umfangsrichtung versetzte Anordnung der Kupplungssegmente 2 und 3 ist in Fig. 1 erkennbar.

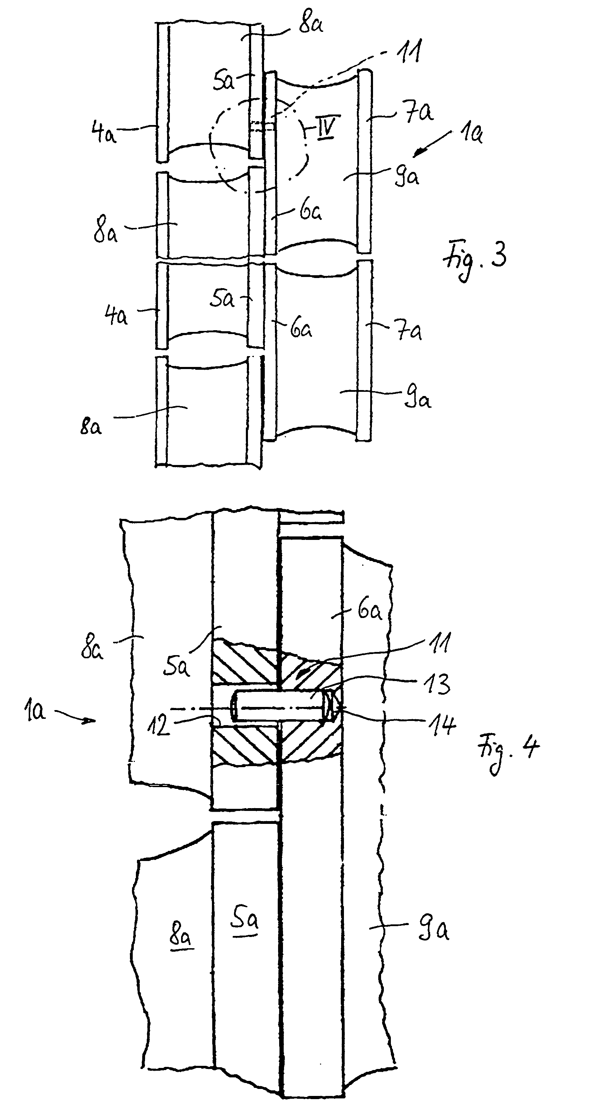

Um zu verhindern, daß die Kupplung 1 falsch montiert werden kann, d.h. um zu verhindern, daß die Teilungsfugen der metallischen Mittelsegmentteile 5, 6 der benachbarten Kupplungsreihen an irgendeiner Stelle des Umfangs axial miteinander fluchten, sind die metallischen Mittelsegmentteile 5, 6 mit einer formschlüssig wirksamen Codierung versehen. Hierzu ist beim dargestellten Ausführungsbeispiel gemäß Fig. 1 an jedem metallischen Mittelsegmentteil 5 im Bereich des oberen Verbindungsflanschabschnittes jeweils ein axial zu der anderen Kupplungsreihe hin abragender Paßbolzen 13 vorgesehen, der analog dem Ausführungsbeispiel nach den Fig. 3 und 4 mittels einer Preßpassung in einer entsprechenden Bohrung des Mittelsegmentteiles 5 fest verankert ist. Insgesamt vier Kupplungssegmentteilen 3 der anderen Kupplungsreihe ist - auf die gewünschte Montageposition bezogen - jeweils eine korrespondierende Paßaussparung 12 zugeordnet, die als Axialbohrung analog der Darstellung nach den Fig. 3 und 4 gestaltet ist.

Beim dargestellten Ausführungsbeispiel sind die durch die Bolzen 13 und die korrespondierenden Paßbohrungen 12 definierten Paßanordnungen jeweils derart positioniert, daß die Paßbolzen 13 und Paßbohrungen 12 ausschließlich in einer in Umfangsrichtung versetzten Montageposition der beiden Kupplungsreihen axial ineinandergreifen können, bei denen sich die Teilungsfugen der Kupplungssegmente 2 jeweils auf der Hälfte des durch die Kupplungssegmente 3 jeweils überdeckten Umfangswinkels befinden. Es ergibt sich somit eine in Umfangsrichtung symmetrische Versetzung der beiden Kupplungsreihen zueinander.

In gleicher Weise kann jedoch auch durch die entsprechende Paßanordnung eine asymmetrische Versetzung in Umfangsrichtung erfolgen, solange gewährleistet ist, daß die Teilungsfugen der beiden Kupplungsreihen an keiner Stelle miteinander fluchten. Grundsätzlich ist es auch ausreichend, lediglich eine einzelne Paßbolzen/Paßbohrung-Kombination vorzusehen, da durch die vorgegebene Versetzung der beiden mit der Paßbohrung bzw. dem Paßbolzen versehenen Kupplungssegmente zwangsläufig auch die jeweils anschließenden Kupplungssegmente beider Kupplungsreihen in Umfangsrichtung zueinander versetzt werden müssen.

Das lediglich schematisch dargestellte Ausführungsbeispiel einer Kupplung 1a gemäß den Fig. 3 und 4 weist ebenfalls zwei Kupplungsreihen auf, die mit geringfügig anders gestalteten Kupplungssegmenten versehen sind. Aus der Abwicklung gemäß den Fig. 3 und 4 ist erkennbar, daß die Kupplungssegmente beider Kupplungsreihen grundsätzlich wie die Kupplungssegmente 3 des Ausführungsbeispiels nach den Fig. 1 und 2 aufgebaut sind, wobei die in der Darstellung nach den Fig. 3 und 4 linke Kupplungsreihe eine andere Teilung aufweist als die in der Darstellung nach Fig. 3 und 4 rechte Kupplungsreihe. Grundsätzlich funktionsgleiche Bauteile der Kupplung 1a sind daher mit den gleichen Bezugszeichen wie beim Ausführungsbeispiel nach den Fig. 1 und 2 unter Hinzufügung des Buchstabens a" versehen. Auch die Kupplungssegmente der beiden Kupplungsreihen der Kupplung 1a weisen axial aneinanderschließende, metallische Mittelsegmentteile 5a, 6a auf, die durch eine Paßanordnung 11 ausschließlich in einer in Umfangsrichtung symmetrisch zueinander versetzten Anordnung miteinander verbindbar sind. Die Paßanordnung 11 ist analog dem zuvor beschriebenen Ausführungsbeispiel gestaltet, indem in dem metallischen Mittelsegmentteil 6a eine Sackbohrung 14 zur kraftschlüssigen, fest verankerten Aufnahme eines Paßbolzens 13 vorgesehen ist. Der Paßbolzen 13 sitzt mittels einer Preßpassung in der Sackbohrung 14. Der Paßbolzen 13 ragt axial von dem metallischen Mittelsegmentteil 6a zur anderen Kupplungsreihe hin ab, so daß bei nicht ausreichend versetzter Anordnung der beiden Kupplungsreihen eine Montage der Kupplungen im Bereich der Mittelsegmentteile 5a, 6a nicht möglich ist. Eine Montage wird ausschließlich in der Montageposition ermöglich, in der der Paßbolzen 13 mit einer korrespondierenden Paßbohrung 12 in dem anderen metallischen Mittelsegmentteil 5a fluchtet. Die Paßbohrung 12 weist einen größeren Durchmesser als der Außendurchmesser des Paßbolzens 13 auf, so daß der Paßbolzen 13 in der Paßbohrung 12 mit Spiel aufnehmbar ist. Dadurch wird ein Toleranzausgleich beim Zusammenbau der Kupplung 1a erzielt.

Eine formschlüssig wirksame Codierung in Form einer Paßanordnung, wie sie anhand der Ausführungsbeispiele nach den Fig. 1 bis 4 beschrieben worden ist, ist gemäß anderen Ausführungsbeispielen der Erfindung an die jeweils bei entsprechenden Kupplungen vorhandenen konstruktiven Gegebenheiten anpaßbar. Falls eine Kupplung mit mehr als zwei Kupplungsreihen vorgesehen ist, so kann eine Codierung entsprechend zwischen den jeweils benachbarten Reihen vorgenommen werden. Neben axial wirkenden Paßanordnungen sind auch radial wirkende Paßanordnungen vorgesehen. Entsprechende Paßfortsätze und Paßaussparungen solcher Paßanordnungen können einstückig an den jeweiligen Mittelsegmentteilen angeformt oder aber bei der Herstellung als getrennte Teile mit den jeweiligen Mittelsegmentteilen fest verankert werden. Es ist auch möglich, eine Paßanordnung dadurch zu schaffen, daß lediglich ein Mittelsegmentteil in der einen Kupplungsreihe mit wenigstens einem Paßfortsatz versehen ist, der zwischen ohnehin vorhandene Teilungsfugen der anderen Kupplungsreihe hineinragt. Die Paßanordnungen müssen auch nicht notwendigerweise im Bereich der metallischen Mittelsegmentteile vorgesehen sein, sondern können je nach konstruktiver Gestaltung der Kupplungssegmente auch zwischen benachbarten Gummikörpern der Kupplungsreihen vorgesehen sein.

## Patentansprüche

1. Elastische Kupplung mit wenigstens zwei Kupplungsreihen, die jeweils aus mehreren, ringförmig aneinanderschließenden elastischen Kupplungssegmenten (2, 3) zusammengesetzt sind, wobei die Kupplungssegmente der beiden Kupplungsreihen in einem Betriebszustand der Kupplung fest miteinander verbunden sind,
**dadurch gekennzeichnet,**
**daß** wenigstens zwei einander benachbarte Kupplungssegmente (2, 3) jeder Kupplungsreihe mit wenigstens einer gemeinsamen, formschlüssig wirksamen Paßanordnung (11, 12, 13) versehen sind, mittels der die benachbarten Kupplungssegmente (2, 3) ausschließlich in einer definierten, in Umfangsrichtung teilweise überlagerten Montageposition zusammenfügbar sind.

2. Kupplung nach Anspruch 1, **dadurch gekennzeichnet, daß** die Paßanordnung (11) wenigstens einen an einem Kupplungssegment (2) einer ersten Kupplungsreihe fest verankerten Paßfortsatz (13) sowie wenigstens eine korrespondierende, den Paßfortsatz (13) aufnehmende Paßaussparung (12) an der zweiten Kupplungsreihe aufweist, die bei in Umfangsrichtung zueinander teilweise überlagerter Montageposition der Kupplungssegmente (2, 3) ineinanderfügbar sind.

3. Kupplung nach Anspruch 2, **dadurch gekennzeichnet, daß** der Paßfortsatz als axial von einem stabilen Segmentteil (5, 6a) des einen Kupplungssegmentes (2) abragender Bolzen (13) gestaltet ist, dem an einem benachbarten Segmentteil (6, 5a) des anderen Kupplungssegmentes (3) eine korrespondierende Axialbohrung (12) zugeordnet ist, die den Bolzen (13) mit wenigstens geringem Spiel aufnimmt.

4. Kupplung nach Anspruch 2 oder 3, **dadurch gekennzeichnet, daß** als Paßaussparungen der zweiten Kupplungsreihe vorhandene Teilungsfugen zwischen ringartig aneinanderschließenden Kupplungssegmenten der zweiten Kupplungsreihe vorgesehen sind.

5. Kupplung nach einem der vorhergehenden Ansprüche, **dadurch gekennzeichnet, daß** bei zumindest teilweise konzentrisch überlagerten Kupplungsreihen die Paßanordnung wenigstens einen radial abragenden Paßfortsatz an einem Kupplungssegment der ersten Kupplungsreihe aufweist, der in der Montageposition in wenigstens eine korrespondierend radial ausgerichtete Paßaussparung eines Kupplungssegmentes der anderen Kupplungsreihe hineinragt.

## Claims

1. Resilient coupling with at least two coupling rows which are in each case composed of a plurality of resilient coupling segments (2, 3) adjoining one another in annular fashion, wherein the coupling segments of the two coupling rows are firmly connected together when the coupling is in an operating state,
**characterised in**
**that** at least two adjacent coupling segments (2, 3) of each coupling row are provided with at least one common, positively acting mating arrangement (11, 12, 13), by means of which the adjacent coupling segments (2, 3) can be joined together solely in a defined assembly position which is partly superimposed in the circumferential direction.

2. Coupling according to Claim 1, **characterised in that** the mating arrangement (11) comprises at least one mating prolongation (13), which is firmly anchored to a coupling segment (2) of a first coupling row, and at least one corresponding mating recess (12), which accommodates the mating prolongation (13), at the second coupling row, which prolongation and recess can be nested into one another when the coupling segments (2, 3) are in the assembly position in which they are partly superimposed in the circumferential direction.

3. Coupling according to Claim 2, **characterised in that** the mating prolongation is formed as a pin (13) which protrudes axially from a stable segment part (5, 6a) of one coupling segment (2) and with which a corresponding axial bore (12) is associated at an adjacent segment part (6, 5a) of the other coupling segment (3), which bore accommodates the pin (13) with at least a small amount of clearance.

4. Coupling according to Claim 2 or 3, **characterised in that** dividing gaps between coupling segments, adjoining one another in annular fashion, of the second coupling row are provided as mating recesses of the second coupling row.

5. Coupling according to any one of the preceding Claims,
**characterised in that**, with the coupling rows at least partly superimposed concentrically, the mating arrangement comprises at least one radially protruding mating prolongation at a coupling segment of the first coupling row, which prolongation projects into at least one corresponding, radially oriented mating recess of a coupling segment of the other coupling row in the assembly position.

## Revendications

1. Accouplement élastique avec au moins deux rangées d'accouplement qui sont respectivement composées de plusieurs segments d'accouplement élastiques (2, 3) se raccordant annulairement entre eux, les segments d'accouplement des deux rangées d'accouplement étant fixement reliés entre eux dans un état de service de l'accouplement, **caractérisé en ce qu'**au moins deux segments d'accouplement mutuellement voisins (2, 3) de chaque rangée d'accouplement sont pourvus d'au moins un agencement d'ajustement commun (11, 12, 13) actif par engagement positif, au moyen duquel les segments d'accouplement voisins (2, 3) peuvent être assemblés exclusivement dans une position de montage définie, partiellement superposée en direction circonférentielle.

2. Accouplement selon la revendication 1, **caractérisé en ce que** l'agencement d'ajustement (11) présente au moins un prolongement d'ajustement (13) fixement ancré sur un segment d'accouplement (2) d'une première rangée d'accouplement ainsi qu'au moins un évidement d'ajustement correspondant (12) prévu sur la deuxième rangée d'accouplement et recevant le prolongement d'ajustement (13), qui peuvent être assemblés par emboîtement dans la position de montage partiellement mutuellement superposée, en direction circonférentielle, des segments d'accouplement (2, 3).

3. Accouplement selon la revendication 2, **caractérisé en ce que** le prolongement d'ajustement est réalisé sous la forme d'une goupille (13) faisant axialement saillie d'une partie de segment stable (5, 6a) de l'un (2) des segments d'accouplement, goupille à laquelle est associée, sur une partie de segment voisine (6, 5a) de l'autre segment d'accouplement (3), un perçage axial correspondant (12) qui reçoit la goupille (13) avec au moins un faible jeu.

4. Accouplement selon la revendication 2 ou 3, **caractérisé en ce que** des joints de séparation existants entre des segments d'accouplement se raccordant annulairement entre eux de la deuxième rangée d'accouplement sont prévus comme évidements d'ajustement de la deuxième rangée d'accouplement.

5. Accouplement selon l'une des revendications précédentes, **caractérisé en ce que**, pour des rangées d'accouplement superposées au moins partiellement concentriquement, l'agencement d'ajustement présente au moins un prolongement d'ajustement faisant radialement saillie sur un segment d'accouplement de la première rangée d'accouplement, prolongement qui, dans la position de montage, s'enfonce dans au moins un évidement d'ajustement, orienté radialement en correspondance, d'un segment d'accouplement de l'autre rangée d'accouplement.
